# EUROPEAN PATENT SPECIFICATION

(11) **EP 3 477 144 B1**
(45) Date of publication and mention of the grant of the patent: **06.05.2020**
(21) Application number: 17198257.2
(22) Date of filing: 25.10.2017
(51) Int. Cl.: F16F 1/393

(54) **ROTARY JOINT**
DREHGELENK
JOINT ROTATIF

(43) Date of publication of application: 01.05.2019
(73) Proprietor: Airbus Operations GmbH, 21129 Hamburg (DE)
(72) Inventor: BENTHIEN, Hermann, 21129 Hamburg (DE); HEGENBART, Matthias, 21129 Hamburg (DE); BOTS, Mika, 21129 Hamburg (DE)
(74) Representative: Isarpatent

(56) References cited:
- DE-C1- 3 311 115
- US-B1- 8 475 074
- US-B2- 6 588 967

## Description

The present invention pertains to a rotary joint.

Beams, joists and frames for construction work, for example in aeronautics, civil engineering or architecture, are designed to withstand bending forces acting perpendicular to the direction of extension of the respective beams. Conventional beams may be implemented as an integral part with flanges at the edges and a web spanning between the flanges. Alternatively, instead of a web, cutter milled struts may be implemented between parallel running longitudinal support bars, thus leading to decreased weight of the beam due to less material being used to form the beam. Such struts may be employed in three-dimensional truss structures, as for example disclosed in documents EP 0 986 685 B1 or EP 1 358 392 B1.

Local load introduction into such beams or frames may, however, lead to torsional moments that are introduced into the attachment joints of the struts with the longitudinal support bars. Such torsional moments may in turn lead to additional moments within the longitudinal support bars that will have to be compensated for by local strengthening means, thereby nullifying some or all of the weight advantages gained. Document EP 3 098 463 A1 provides a rotary joint for constructing frameworks that compensates additional torsional moments coupled into the joints of the frameworks in an efficient and weight saving manner. To this end the rotary joint comprises a socket rod with an at least partly spheroid concave bearing surface and a ball rod having an at least partly spheroid convex bearing surface. To hold the rotary joint together, a housing nut with a threaded wrenching head encircles the socket rod, wherein the ball rod has threaded side walls around the bearing surface, the diameter of the threaded side walls of the ball rod corresponding to a diameter of the threaded wrenching head of the housing nut.

Depending on the specific application, it may be advantageous to mount rods or struts via joints inside a framework in such a way that shocks, impacts or other temporary loads are absorbed within the connection points. For this purpose, conventional fork-bold-lug joint solutions often comprise shock absorbers made from rubber or silicon.

The documents Deshpande et al., "FOAM TOPOLOGY BENDING VERSUS STRETCHING DOMINATED ARCHITECTURES," Acta Materialia, 49, 1035-1040, 2001 and Jiang et al., "Highly-stretchable 3D-architected Mechanical Metamaterials," Scientific Reports, 6: 34147, 2016 disclose soft materials featuring cellular three-dimensional architectures with high stretchability.

Document US 6 588 967 B2 describes a three-dimensional (spherical) joint for connecting mechanical links, which has its concave and convex concentrical spherical surfaces connected by preloaded in compression high shape factor (thin-layered) elastomeric elements, whose shear deformation provides for 3D mobility. Compression (preload) force is applied to the elastomeric elements by pretensioning an elongated tensile member (preferably a cable or a wire).

Against this background, it is an object of the present invention to find improved and yet simple solutions for joint connections with integrated shock absorbers.

This object is achieved by a rotary joint having the features of claim 1.

According to the invention, a rotary joint comprises a socket rod having an at least partly spheroid concave bearing surface; a ball rod having an at least partly spheroid convex bearing surface, wherein the curvature of the concave bearing surface of the socket rod corresponds substantially to the curvature of the convex bearing surface of the ball rod, wherein the concave bearing surface and the convex bearing surface are arranged with a shock absorbing gap in between; a damping structure integrated into the shock absorbing gap; and a plurality of tension ligaments resiliently connecting the socket rod with the ball rod. The damping structure includes a three-dimensional scaffold with a plurality of ligaments being connected with each other.

One idea of the present invention is to employ rotary joints of a ball-and-socket type and to furnish them with a damping structure inside a defined gap left out between ball and socket in order to absorb shocks, impacts and other loads within the joint. The shape of the concave outer surface of the socket rod corresponds generally to the shape of the convex outer surface of the ball rod so that both connection parts may be coupled to each other via the damping structure arranged in between. As a result, the convex and concave outer surfaces may move in a sliding manner with respect to each other, similar to a ball-and-socket connection, although including a damping behavior. The damping structure may be, for example, a flexible substance that is arranged between the socket and ball rods. Alternatively or additionally, the damping structure may include a flexible structure that may transfer forces and moments from one joint part to the other, i.e. from the ball rod to the socket rod and vice versa. The joint is hold together by the plurality of tension ligaments, which provide tensile strength against tensile loads on the rotary joint. The tension ligaments may attach to the socket rod and the ball rod outside of the shock absorbing gap in a similar vein as ligaments in a human body connect bones across a joint, e.g. a knee joint. In this picture, the damping structure corresponds to shock-absorbing connective tissue, for example similar to the menisci of a knee joint. However, in other embodiments, the tension ligaments may connect the bearing surfaces of the ball rod and the socket rod within the shock absorbing gap. Thus, the tension ligaments provide tensile strength while the damping structure provides compression stiffness. In conjunction with each other, the ligaments and the damping structure provide structural integrity to the rotary joint when it undergoes tension, pressure and even torsion.

Along the contacting surfaces of the "ball" part and the "socket" part a swivelling motion of the socket rod with respect to the ball rod and vice versa may be realized. A lateral moment of a strut or similar coupled, for example, to the socket rod with respect to the contacting surfaces of the rotary joint will lead to a shifting movement of the socket rod along the outer surface of the ball rod. Thus, any bending moment acting perpendicular to the orientation of the strut/socket rod will vanish with respect to the rotary joint due to the compensating sliding movement of the socket part with respect to the ball part. This means in turn that the rotary joint will be essentially free of any bending moments that would otherwise be brought into the rotary joints. The axes of struts coupled to such rotary joints will always be oriented towards the center of the rotary joint, thereby balancing out the rotary joint optimally under any loading situation on the struts.

Particularly advantageous may additionally be the reduction of costs, weight, lead time, part count and manufacturing complexity coming along with employing any kind of layer manufacturing technology when designing the rotary joint of the invention.

Advantageous embodiments and improvements of the present invention are found in the subordinate claims.

According to an embodiment of the invention, the damping structure may include a flexible substance. For example, the socket rod, ball rod and tension ligaments may be formed in a first manufacturing step. Then the flexible substance may be brought into the shock absorbing gap in a subsequent production step. In this embodiment, tension loads may be supported by the tension ligaments while pressure loads may be absorbed by the flexible substance. In particular embodiments, the flexible substance may enclose the tension ligaments in a similar vein as a matrix material surrounds reinforcing fibers in a fiber-reinforced composite material.

According to an embodiment of the invention, the flexible substance may comprise a resin. In one particular example, the flexible substance may be a flexible resin that may be, for example, injected into the shock absorbing gap. The flexible substance may be, for example, a foam-like material with a defined shock absorbing capability. The foam may further couple to the bearing surfaces and feature progressive spring behavior or spring resistance.

According to an embodiment of the invention, the flexible substance may fill up the shock absorbing gap. In case the tension ligaments traverse, run through and/or are arranged within the shock absorbing gap, the flexible substance thus fills up the remaining and/or intermediate space within the shock absorbing gap. This way, the flexible substance may attach or couple to the bearing surfaces over their complete or substantially complete surface areas and thus provide an efficient coupling between the socket rod and the ball rod. In one particular example, the flexible substance may be a flexible resin that is injected between the bearing surfaces and then cured to connect the bearing surfaces in a flexible manner with each other.

According to an embodiment of the invention, the tension ligaments may traverse the flexible substance. Thus, the flexible substance may enclose the tension ligaments as a matrix.

According to an embodiment of the invention, the tension ligaments may be configured electrically conductive. For example, the tension ligaments may be formed from metal, metal alloy and/or other conductive materials. The tension ligaments may be arranged as individual electric lines within a matrix of the flexible substance, which may be configured as an electric insulator. In one particular example, the tension ligaments may be configured to provide an electric ground connection between the socket rod and the ball rod.

According to the invention, the damping structure includes a three-dimensional scaffold with a plurality of ligaments being connected with each other. The scaffold may be for example a cellular solid comprising a framework of ligaments (or struts) that form a multitude of cells. Such cells may be manufactured in very tiny configurations such that a foam-like behavior may be achieved, which means that the damping structure effectively represents a damping (open-celled) foam with defined flexibility and damping behavior for optimal shock absorbing capability. Such foams or scaffolds may be manufactured by various additive manufacturing methods, i.e. 3D-printing methods. The scaffold may deform by either bending or stretching of the ligaments, wherein the ligaments represent the cell walls or the cell framework. Adequately stiff and strong scaffolds may be formed from diverse materials, e.g. from a metal, a metal alloy, a polymer or combinations thereof. The damping structure may thus be configured as a soft and lightweight material with tailored three-dimensional architecture and high deformability and/or plasticity.

According to an embodiment of the invention, the ligaments of the scaffold may be resiliently connected with each other, with the concave bearing surface and with the convex bearing surface. Thus, the scaffold may not only serve as an impact absorbent but may additionally be configured with a defined spring stiffness, thus providing a tensile resistance, i.e. spring behavior, of the damping structure.

According to an embodiment of the invention, the ligaments of the scaffold may comprise the tension ligaments. This advantageously combines tensile strength and compression stiffness within the damping structure, which means that the ligaments of the damping structure provide spring and damping properties at the same time (as well as torsion stiffness).

According to an embodiment of the invention, the ligaments of the scaffold may be formed with a graded thickness. This embodiment is inspired from looking at fruit peels, such as the Pomelo fruit. One idea may be to form a scaffold or lattice that is thinner at the edge of the impact side and gets progressively thicker towards the other (to be protected) part. Due to this particular configuration of the scaffold, the impact may be decelerated or mitigated in a gradual and controlled fashion. This way, energy absorption can be significantly increased at identical weight of the overall structure. The material may get locally densified before collapse propagates through the structure, resulting in more efficient material usage. In particular examples, materials may be chosen that feature plasticity, such as a metal or plastic. Additionally or alternatively, other graded configurations of the scaffold may be provided, e.g. with graded density of the ligament material and/or graded stiffness of the ligaments.

According to an embodiment of the invention, the thickness of the ligaments of the scaffold may increase or decrease continuously from the concave bearing surface to the convex bearing surface.

According to an embodiment of the invention, the flexible substance may fill up intermediate spaces in the scaffold. Thus, in some embodiments of the invention, the damping properties may be achieved by combining a flexible substance with a cellular solid.

According to an embodiment of the invention, the scaffold may constitute a three-dimensional lattice. The scaffold may thus form a repeating arrangement of unit cells, each cell being formed by the ligaments of the scaffold.

According to an embodiment of the invention, the lattice may have a three-dimensional architecture comprising at least one of an octet truss, a Kelvin structure and a Kagome structure. The person of skill will thus be able to provide a structure that features optimal behavior under tension, pressure and/or torsion. An octet truss (also called an isotropic vector matrix) is a simple example for a space frame that consists of interlocking square pyramids and tetrahedra. However, in more complex variations the lengths of the struts/ligaments may change to curve the overall structure. Moreover, other geometrical shapes may be incorporated. For example, a Kelvin structure is formed by 14-faced space-filling polyhedrons with six square faces and eight hexagonal faces (called a tetrakaidecahedron or tetradecahedron). The structure of the scaffold may be chosen generally to minimize weight while keeping sufficient stiffness and strength. Other variants include for example a Weaire-Phelan structure, a Kagome structure and so on. One particular example of a Kagome structure, which is called hyper Kagome lattice, is formed from regular tetrahedra and truncated tetrahedral. Each of these different structures may provide advantages for different applications. For example, some structures may feature uniform compression behavior (e.g. a Kelvin structure), while others may absorb more energy in the high-strain regime (e.g. a Kelvin structure with graded thickness).

According to an embodiment of the invention, the lattice may have polyhedral unit cells comprising at least one of tetrahedron, cube, octahedron, dodecahedron, tetrakaidecahedron and icosahedron. A Kelvin structure for example may be formed by filling space with tetrakaidecahedrons. An octet truss for example may be formed by filling space with octahedrons and tetrahedrons.

According to an embodiment of the invention, the lattice may be configured stretching dominated. Stretching-dominated cellular solids are usually more weight-efficient than bending-dominated ones. Furthermore, stretching-dominated lattice structures may absorb more energy due to higher yield loads relative to bending-dominated lattices. The energy absorption may be further improved by using thickness gradients, in particular to improve the energy absorption in the high strain regime.

According to an embodiment of the invention, the rotary joint may be integrally formed using an additive manufacturing (AM) or 3D printing technique. This means that not only the socket rod and the ball rod may be integrally formed together with the tension ligaments. Moreover, even the damping structure may be integrally formed together with the other parts of the rotary joint as on piece in one single process. In general, aspects of the invention offer great advantages for 3D printing or AM technology since 3D components may be printed without the additional need for subjecting the components or objects to further processing steps. This allows for a more efficient, material saving and time saving manufacturing process. Particularly advantageous in general is the reduction of costs, weight, lead time, part count and manufacturing complexity coming along with employing AM technology for printing complex joint configurations. Moreover, the geometric and functional shape of the printed components or objects may be flexibly designed with regard to the intended technical purpose of parts or regions of the component/object. Cellular solids or foam-like structures as described herein are particularly suited for additive methods. Using AM techniques the properties of these structures may be controlled effectively and thus these components may be tailored for specific applications.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries and aerospace industries.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a cross-sectional view of a rotary joint according to an example.
Fig. 2 schematically depicts a cross-sectional view of a rotary joint according to an embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

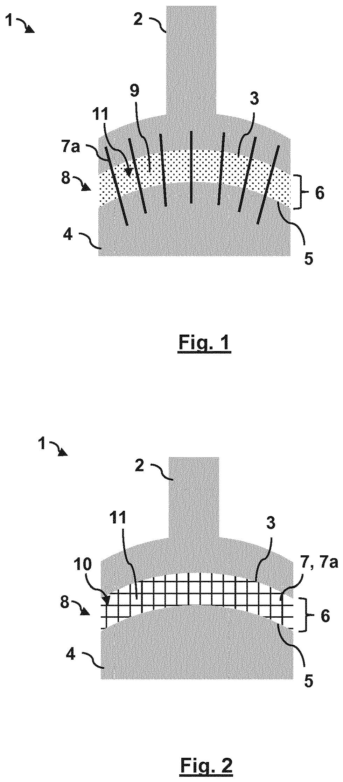

Figure 1 schematically depicts a cross-sectional view of a rotary joint 1 according to an example.

The rotary joint 1 comprises a socket rod 2 having an at least partly spheroid concave bearing surface 3. The rotary joint 1 further comprises a ball rod 4 having an at least partly spheroid convex bearing surface 5. Both the socket rod 2 and the ball rod 4 may be connected and/or coupled to further components, e.g. the struts of a framework (not shown). The curvature of the concave bearing surface 3 of the socket rod 2 corresponds substantially to the curvature of the convex bearing surface 5 of the ball rod 4. As a result, the convex and concave bearing surfaces 3, 5 may move in a sliding manner with respect to each other if brought into direct contact, similar to a ball-and-socket connection. However, the concave bearing surface 3 and the convex bearing surface 5 are arranged with a shock absorbing gap 6 in between, into which a damping structure 8 is integrated. Thus, the bearings surfaces 3, 5 do not stand in direct contact with each other. However, the damping structure 8 as well as the curvature of the bearing surfaces 3, 5 is specifically adapted to allow a sliding motion between the socket rod 2 and the ball rod 4 via the damping structure 8 in a similar vein as a conventional ball-and-socket joint.

As already mentioned, the present rotary joint 1 offers a damping behavior. The function of the damping structure 8 is to absorb any impact or temporary load that acts upon the rotary joint 1, e.g. on the socket rod 2 and/or the ball rod 4. To this end, the damping structure 8 comprises a flexible substance 9 in the form of a flexible resin or a foam or similar that fills up the shock absorbing gap 6.

The rotary joint 1 further comprises a plurality of tension ligaments 7a resiliently connecting the socket rod 2 with the ball rod 4. While the resin or foam of the damping structure 8 provides compression stiffness under pressure loads, the tension ligaments 7a provide tensile strength to restrain the socket rod 2 and the ball rod 4 to not detach from each other under tensile load. The tension ligaments 7a may be configured for example as fibers fixing the socket rod 2 to the ball rod 4 to each other from outside the shock absorbing gap 6. Additionally or alternatively, the tension ligaments 7a however may also connect the bearing surfaces 3, 5 and thus the socket rod 2 and the ball rod 4 with each other within the shock absorbing gap 6 (as it is shown in Fig. 1). In the particular example of Fig. 1, the flexible substance 9 fills up intermediate spaces 11 between the tension ligaments 7a or, to put it another way, is interspersed with the tension ligaments 7a in a similar vein as a matrix material is penetrated by fibers in a fiber-reinforced component. This particular combination of tension ligaments 7a and flexible substance 9 provides the rotary joint with structural integrity under tensile and pressure loads as well as torsion loads. Due to the flexibility of the substance 9 and the resilient coupling of the tension ligaments 7a, the socket rod 2 is movable within limits with respect to the ball rod 4, that is a swivelling motion of the rods 2, 4 is possible, as well as of any struts potentially attached to the rods 2, 4.

A particular advantage of the rotary joint 1 as disclosed 10 is the possibility to manufacture some or all parts using a 3D printing or an additive manufacturing (AM) technique. Particularly the socket rod 2 and the ball rod 4 may be 3D printed with the tension ligaments 7a already joint seamlessly with the other components. Amongst others, this leads to an advantageous mechanical stability of the rotary joint 1. The flexible substance 9 may be injected into the shock absorbing gap 6 afterwards. However, the damping structure 8 may already be formed together with the rest of the rotary joint 1 in a single process (see the embodiment of Fig. 2 discussed below).

The tension ligaments 7a may be configured electrically conductive. For example, the tension ligaments 7a may be formed from metal, metal alloy and/or other conductive materials. The tension ligaments 7a may serve as individual electric lines within the matrix of the flexible substance 9, which may be configured as an electric insulator. In one particular example, the tension ligaments 7a may be configured to provide an electric ground connection between the socket rod 2 and the ball rod 4.

Fig. 2 schematically depicts a cross-sectional view of a rotary joint 1 according to an embodiment of the invention.

As the example of Fig. 1, the embodiment of Fig. 2 comprises a socket rod 2 having an at least partly spheroid concave bearing surface 3 and a ball rod 4 having an at least partly spheroid convex bearing surface 5. As in Fig. 1, the curvature of the concave bearing surface 3 of the socket rod 2 corresponds substantially to the curvature of the convex bearing surface 5 of the ball rod 4. Moreover, the concave bearing surface 3 and the convex bearing surface 5 are arranged with a shock absorbing gap 6 in between, into which a damping structure 8 is integrated.

However, in the example of Fig. 2, the plurality of tension ligaments 7a resiliently connecting the socket rod 2 with the ball rod 4 are part of the damping structure 8, which is formed as a three-dimensional scaffold 10 of a plurality of ligaments 7 (including the tension ligaments 7a) being resiliently connected with each other and with the bearing surfaces 3, 5. The scaffold 10 itself constitutes a three-dimensional lattice, being shown in Fig. 2 only schematically, that is a cellular solid comprising a plurality of unit cells, wherein the ligaments 7 form the framework of the cell structure. The lattice may have for example a three-dimensional architecture in the form of an octet truss or similar, that is a structure build from square pyramids (more specifically: octahedrons) and tetrahedrons. The octet truss is an example for a bending dominated structure, that is a structure where the constituents carry loads primarily in bending. Most common foams or foam-like structures are bending dominated. An example for a stretching-dominated structure, i.e. the constituents are mainly loaded under tension or compression, is a Kelvin structure build from specific polyhedrons with 14 faces called tetradecahedrons, with six square faces and eight hexagonal faces. The lattice in Fig. 2 may be for example such a stretching-dominated Kelvin structure. Stretching-dominated structures are generally more efficient from a weight standpoint. Moreover, they may provide advantages with respect to energy absorption compared to bending-dominated structures.

The damping structure 8 of Fig. 2 may be formed using an AM or 3D-printing technique and thus may be integrally formed together with the other parts of the rotary joint 1 in one production process. Some of the ligaments 7 of the scaffold 10 may be formed as tension ligaments 7a providing tensile strength to the rotary joint 1, e.g. by configuring the scaffold 10 with a spring resistance. Furthermore, the ligament 7 structure of the scaffold 10 provides damping functionality to the rotary joint 1. The embodiment of Fig. 2 thus is a rotary joint 1 formed as one single piece with structurally integrated stiffness under tension, pressure and torsion.

In principle, it is possible to fill up intermediate spaces 11 in the scaffold 10 with a flexible substance in order to further optimize the damping behavior for specific applications. Furthermore, the ligaments 7 of the scaffold 10 may be configured with a grade thickness or density or similar, e.g. continuously decreasing from the concave bearing surface 3 to the convex bearing surface 5 or vice versa. Based on graded variants, the damping behavior of the rotary joint 1 can be further configured for the specific application at hand. For example, a Kelvin structure with ligaments 7 graded in thickness features improved energy absorption at identical relative density with respect to a Kelvin structure with ligaments 7 of fixed thickness.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: rotary joint
- 2: socket rod
- 3: concave bearing surface
- 4: ball rod
- 5: convex bearing surface
- 6: shock absorbing gap
- 7: ligament
- 7a: tension ligament
- 8: damping structure
- 9: flexible substance
- 10: scaffold
- 11: intermediate space

## Claims

1. Rotary joint (1), comprising:
a socket rod (2) having an at least partly spheroid concave bearing surface (3);
a ball rod (4) having an at least partly spheroid convex bearing surface (5), wherein the curvature of the concave bearing surface (3) of the socket rod (2) corresponds substantially to the curvature of the convex bearing surface (5) of the ball rod (4), wherein the concave bearing surface (3) and the convex bearing surface (5) are arranged with a shock absorbing gap (6) in between;
a damping structure (8) integrated into the shock absorbing gap (6); and
a plurality of tension ligaments (7a) resiliently connecting the socket rod (2) with the ball rod (4);
**characterized in that** the damping structure (8) includes a three-dimensional scaffold (10) with a plurality of ligaments (7) being connected with each other.

2. Rotary joint (1) according to claim 1, wherein the damping structure (8) includes a flexible substance (9), in particular a resin.

3. Rotary joint (1) according to claim 2, wherein the flexible substance (9) fills up the shock absorbing gap (6).

4. Rotary joint (1) according to claim 3, wherein the tension ligaments (7a) traverse the flexible substance (9).

5. Rotary joint (1) according to one of the claims 1 to 4, wherein the tension ligaments (7a) are configured electrically conductive.

6. Rotary joint (1) according to one of the preceding claims, wherein the ligaments (7) of the scaffold (10) are resiliently connected with each other, with the concave bearing surface (3) and with the convex bearing surface (5).

7. Rotary joint (1) according to one of the preceding claims, wherein the ligaments (7) of the scaffold (10) comprise the tension ligaments (7a).

8. Rotary joint (1) according to one of the preceding claims, wherein the ligaments (7) of the scaffold (10) are formed with a graded thickness.

9. Rotary joint (1) according to claim 8, wherein the thickness of the ligaments (7) of the scaffold (10) increases or decreases continuously from the concave bearing surface (3) to the convex bearing surface (5).

10. Rotary joint (1) according to one of the preceding claims, wherein the scaffold (10) constitutes a three-dimensional lattice.

11. Rotary joint (1) according to claim 10, wherein the lattice has a three-dimensional architecture comprising at least one of an octet truss, a Kelvin structure and a Kagome structure.

12. Rotary joint (1) according to claim 10 or 11, wherein the lattice has polyhedral unit cells comprising at least one of tetrahedron, cube, octahedron, dodecahedron, tetrakaidecahedron and icosahedron.

13. Rotary joint (1) according to one of the claims 10 to 12, wherein the lattice is configured stretching dominated.

14. Rotary joint (1) according to one of the claims 1 to 13, wherein the rotary joint (1) is integrally formed using additive manufacturing.

## Patentansprüche

1. Drehgelenk (1), Folgendes umfassend:
eine Pfannenstange (2), die eine zumindest teilweise kugelförmige konkave Lagerfläche (3) aufweist;
eine Kugelstange (4), die eine zumindest teilweise kugelförmige konvexe Lagerfläche (5) aufweist, wobei die Krümmung der konkaven Lagerfläche (3) der Pfannenstange (2) im Wesentlichen der Krümmung der konvexen Lagerfläche (5) der Kugelstange (4) entspricht, wobei die konkave Lagerfläche (3) und die konvexe Lagerfläche (5) mit einem Stoßdämpfungsspalt (6) dazwischen angeordnet sind;
eine Dämpfungsstruktur (8), die in den Stoßdämpfungsspalt (6) integriert ist; und
mehrere Zugbänder (7a), die die Pfannenstange (2) elastisch mit der Kugelstange (4) verbinden;
**dadurch gekennzeichnet, dass**
die Dämpfungsstruktur (8) ein dreidimensionales Gerüst (10) enthält, wobei mehrere Bänder (7) miteinander verbunden sind.

2. Drehgelenk (1) nach Anspruch 1, wobei die Dämpfungsstruktur (8) eine flexible Substanz (9), insbesondere Harz, enthält.

3. Drehgelenk (1) nach Anspruch 2, wobei die flexible Substanz (9) den Stoßdämpfungsspalt (6) auffüllt.

4. Drehgelenk (1) nach Anspruch 3, wobei die Zugbänder (7a) die flexible Substanz (9) überqueren.

5. Drehgelenk (1) nach einem der Ansprüche 1 bis 4, wobei die Zugbänder (7a) dazu ausgelegt sind, elektrisch leitfähig zu sein.

6. Drehgelenk (1) nach einem der vorstehenden Ansprüche, wobei die Bänder (7) des Gerüsts (10) miteinander, mit der konkaven Lagerfläche (3) und mit der konvexen Lagerfläche (5) elastisch verbunden sind.

7. Drehgelenk (1) nach einem der vorstehenden Ansprüche, wobei die Bänder (7) des Gerüsts (10) die Zugbänder (7a) umfassen.

8. Drehgelenk (1) nach einem der vorstehenden Ansprüche, wobei die Bänder (7) des Gerüsts (10) mit einer abgestuften Stärke ausgebildet sind.

9. Drehgelenk (1) nach Anspruch 8, wobei die Stärke der Bänder (7) des Gerüsts (10) von der konkaven Lagerfläche (3) zur konvexen Lagerfläche (5) durchgehend zunimmt oder abnimmt.

10. Drehgelenk (1) nach einem der vorstehenden Ansprüche, wobei das Gerüst (10) ein dreidimensionales Gitter ist.

11. Drehgelenk (1) nach Anspruch 10, wobei das Gitter einen dreidimensionalen Aufbau aufweist, der ein Achterfachwerk und/oder eine Kelvin-Struktur und/oder eine Kagome-Struktur umfasst.

12. Drehgelenk (1) nach Anspruch 10 oder 11, wobei das Gitter vielflächige Zelleneinheiten aufweist, die ein Tetraeder und/oder einen Würfel und/oder ein Oktaeder und/oder ein Dodekaeder und/oder ein Tetradekaeder und/oder ein Ikosaeder umfasst.

13. Drehgelenk (1) nach einem der Ansprüche 10 bis 12, wobei das Gitter dazu ausgelegt ist, ausdehnungsdominiert zu sein.

14. Drehgelenk (1) nach einem der Ansprüche 1 bis 13, wobei das Drehgelenk (1) mittels additiver Fertigung einstückig ausgebildet ist.

## Revendications

1. Joint rotatif (1), comprenant :
une tige de douille (2) ayant une surface d'appui concave au moins partiellement sphéroïdale (3) ;
une tige de rotule (4) ayant une surface d'appui convexe au moins partiellement sphéroïdale (5), la courbure de la surface d'appui concave (3) de la tige de douille (2) correspondant substantiellement à la courbure de la surface d'appui convexe (5) de la tige de rotule (4), la surface d'appui concave (3) et la surface d'appui convexe (5) étant agencées avec un espace d'absorption de chocs (6) entre elles ;
une structure d'amortissement (8) intégrée dans l'espace d'absorption de chocs (6) ; et
une pluralité de ligaments de tension (7a) raccordant de façon élastique la tige de douille (2) à la tige de rotule (4) ;
**caractérisé en ce que**
la structure d'amortissement (8) inclut un échafaudage tridimensionnel (10) avec une pluralité de ligaments (7) qui sont raccordés les uns aux autres.

2. Joint rotatif (1) selon la revendication 1, dans lequel la structure d'amortissement (8) inclut une substance souple (9), en particulier une résine.

3. Joint rotatif (1) selon la revendication 2, dans lequel la substance souple (9) remplit l'espace d'absorption de chocs (6).

4. Joint rotatif (1) selon la revendication 3, dans lequel les ligaments de tension (7a) traversent la substance souple (9).

5. Joint rotatif (1) selon l'une des revendications 1 à 4, dans lequel les ligaments de tension (7a) sont configurés pour être électriquement conducteurs.

6. Joint rotatif (1) selon l'une des revendications précédentes, dans lequel les ligaments (7) de l'échafaudage (10) sont raccordés de façon élastique les uns aux autres, à la surface d'appui concave (3) et à la surface d'appui convexe (5).

7. Joint rotatif (1) selon l'une des revendications précédentes, dans lequel les ligaments (7) de l'échafaudage (10) comprennent les ligaments de tension (7a) .

8. Joint rotatif (1) selon l'une des revendications précédentes, dans lequel les ligaments (7) de l'échafaudage (10) sont formés avec une épaisseur graduelle.

9. Joint rotatif (1) selon la revendication 8, dans lequel l'épaisseur des ligaments (7) de l'échafaudage (10) augmente ou diminue de façon continue de la surface d'appui concave (3) à la surface d'appui convexe (5).

10. Joint rotatif (1) selon l'une des revendications précédentes, dans lequel l'échafaudage (10) constitue un treillis tridimensionnel.

11. Joint rotatif (1) selon la revendication 10, dans lequel le treillis a une architecture tridimensionnelle comprenant au moins un élément parmi une poutre octet, une structure de Kelvin et une structure trihexagonale.

12. Joint rotatif (1) selon la revendication 10 ou la revendication 11, dans laquelle le treillis a des cellules unitaires polyédriques comprenant au moins un élément parmi un tétraèdre, un cube, un octaèdre, un dodécaèdre, un tétrakaidécaèdre et un icosaèdre.

13. Joint rotatif (1) selon l'une des revendications 10 à 12, dans lequel le treillis est configuré comme s'étirant dominé.

14. Joint rotatif (1) selon l'une des revendications 1 à 13, dans lequel le joint rotatif (1) est formé de façon solidaire en utilisant une fabrication additive.
